# EUROPÄISCHE PATENTSCHRIFT

(11) **EP 1 328 947 B1**
(45) Veröffentlichungstag und Bekanntmachung des Hinweises auf die Patenterteilung: **20.12.2006**
(21) Anmeldenummer: 01986796.9
(22) Anmeldetag: 27.09.2001
(51) Int. Cl.: H01B 1/20

(54) **LEITFÄHIGER VLIESSTOFF**
CONDUCTIVE NONWOVEN
NON-TISSE CONDUCTEUR

(30) Priorität: 11.10.2000 DE 10050512
(43) Veröffentlichungstag der Anmeldung: 23.07.2003
(73) Patentinhaber: Carl Freudenberg KG, 69469 Weinheim (DE)
(72) Erfinder: JÖRDER, Kurt, 69469 Weinheim (DE); SCHÄFER, Werner, 69488 Birkenau (DE); RETTIG, Hans, 69514 Laudenbach (DE); SALAMA, Karim, 69469 Weinheim (DE); BOCK, Achim, 69469 Weinheim (DE); WAGENER, Silke, 69469 Weinheim (DE); HELMBOLD, Axel, 69469 Weinheim (DE)
(86) Internationale Anmeldenummer: PCT/EP2001/011194
(87) Internationale Veröffentlichungsnummer: WO 2002/031841

(56) Entgegenhaltungen:
- EP-A- 0 187 163
- EP-A- 0 304 825
- EP-A- 0 330 179
- EP-A- 0 791 974
- WO-A-00/47816
- WO-A-01/04980
- US-A- 3 367 851
- US-A- 3 960 601
- US-A- 4 505 797
- US-A- 5 649 982
- US-A- 5 853 429

## Beschreibung

Die Erfindung betrifft einen leitfähigen Vliesstoff.

Leitfähige Vliesstoffe werden als Gasdiffusionsschichten in Membrane Elektrode Assemblies (MEA's) für PEM-(proton exchange membrane)-Brennstoffzellen eingesetzt und müssen elektronenleitfähig und gasdurchlässig sein. Sie müssen weiterhin Kanalstrukturen zum Abtransport des während des Betriebs der Brennstoffzellen gebildeten Reaktionswassers aufweisen und eine Eigensteifigkeit bei limitierter Dichte besitzen. Weiterhin sollen Sie zumindest auf einer Seite eine hohe Oberflächenglätte aufweisen.

Üblicherweise werden heute zweidimensionale textile Werkstoffe wie leitfähige Gewebe oder nassgelegte Vliesstoffe als Ausgangsstoffe für Gasdiffusionsschichten verwendet. Aus dem Dokument JP 06/123050 sind Vliesstoffe mit Dicken von 0,3 bis 0,5 mm bekannt, die aus carbonisierungsfähigen polymeren Faserstoffen wie Polyacrylnitril (PAN) oder oxidierten Polyacrylnitrilen mit Flächengewichten von 100 bis 200 g/m² bestehen. Zum Erzielen der geforderten elektrischen Leitfähigkeit werden diese textilen Flächengebilde bei Temperaturen zwischen 1000 und 2100°C carbonisiert, wobei ein Kohlenstoffgehalt von ca. 90 bis 96 % erzielt wird und gegebenenfalls graphitisiert, wobei ein Kohlenstoffgehalt > 99 % erreicht wird.

Mit dem Carbonisierungs- bzw. Graphitisierungsprozess ist eine Reduzierung des Flächengewichts um 30 bis 60 Gewichtsprozent verbunden. Üblicherweise sind diese nunmehr leitfähigen Flächenstoffe steif und weisen eine relativ offene Struktur auf. Es ist bekannt, zu Erzielung der geforderten Steifigkeit und zur Verbesserung der Leitfähigkeit in x, y und z-Richtung die Gewebe oder Vliesstoffe mit Dispersionen aus leitfähigen Partikeln wie Graphit oder Russ zu imprägnieren oder zu beschichten und zur Erzielung einer hohen Oberflächenglätte anschließend zu pressen.

Weiterhin ist es aus den Dokumenten JP 10/77624 oder JP 10/77625 bekannt, Gasdiffusionsschichten direkt aus Kohlenstofffasem in einem Nasslegeverfahren herzustellen, um damit ein anschließendes Carbonisieren der Precurserfasern entbehrlich zu machen. Als Bindemittel für die Kohlensbofffasem werden dabei Polyvinylalkvhol (PVA)-Lösungen oder Polyäthylenterephthalat (PET)-Substrate eingesetzt. Anschließend können die hydrophoben Eigenschaften der Gasdiffusionsschicht noch durch Ausrüsten mit einem Hydrophobierungsmittel wie Polytetrafluorethylen (PTFE)-Dispersionen und nachfolgendes Sintern eingestellt werden.

Aus der WO 00/47816 A ist ein Vliesstoff bekannt, der als Bindemittel für die Fasern ein Polymer aufweist. Dieses Bindemittel hält die Fasern zusammen.

Die "American Society for Testing and Materials", 100 Barr Harbor Dr., West Conshohocken, PA 19428, kennzeichnet unter der Bezeichnung D 5650 - 97 eine Standardmethode zum Messen der Biegesteifigkeit von Papierlagen in der Einheit "Taber".

Die bekannten Verfahren zur Herstellung von Gasdiffusionsschichten für PEM-Brennstoffzellen besitzen den Nachteil, dass sie für den Transport und die Verarbeitung nicht aufgerollt werden können und dass sie zur Erzielung der geforderten Leitfähigkeiten mit leitfähigen Füllstoffen gefüllt werden müssen.

Der Erfindung liegt der Aufgabe zugründe, einen leitfähigen Vliesstoff anzugeben, die die Nachteile des Standes der Technik überwindet.

Erfindungsgemäß wird die Aufgabe durch einen leitfähigen Vliesstoff gelöst, der carbonisiert und/oder graphitiert ist und eine Biegesteifigkeit < 8 Taber, eine Dichte von 0,1 g/cm³ bis 0,5 g/cm³, eine Dicke von 80 µm bis 500 µm und einer elektrischen Leitfähigkeit von 10 bis 300 S/cm in der Vliesstoffbahn und 30 bis 220 S/cm² senkrecht zur Vliesstoffbahn besitzt und wie in Anspruch 1 definiert ist.

Der erfindungsgemäße leitfähige Vliesstoff wird erhalten aus präoxidierten Fasern als Vorstufe für Carbonfasern, die gegebenenfalls mit bis zu 30 Gew.% einer als Bindefaser dienenden Precurser- sowie mit bis zu 30 Gew.% einer wasserlöslichen Faser mit Fasertitem von 0,5 bis 6,7 dtex gemischt, zu einem Faserflor mit einem Flächengewicht von 60 bis 300 g/m² abgelegt, durch Hochdruck-Fluidstrahlen bei Drücken von 100 bis 300 bar des Faserflors verfestigt, durch Kalandrierung des verfestigten Faservlieses um 50 bis 90 % seiner Ausgangsdicke verdichtet und unter einer Schutzgasatmosphäre bei 800°C bis 2500°C carbonisiert und/oder graphitiert sind. Der so erhaltene leitfähige Vliesstoff weist eine Kanalstruktur in Richtung der Schichtdicke des Vliesstoffes auf. Die präoxidierten Fasern und gegebenenfalls Binde- sowie wasserlöslichen Fasern werden homogen gemischt und zu einem Faserflor abgelegt. Der Faserflor mit Flächengewichten von 30 bis 300 g/m² wird einer Verfestigungseinheit zugeführt, bei der die Fasern mittels hochenergetischer Wasserstrahlen bei Drücken von 100 bis 300 bar verwirbelt und miteinander verschlungen werden. Ein Teil der Fasern weist nach dieser Behandlung eine Orientierung in Richtung der Z-Richtung (Dicke) des Vliesstoffes auf.

Vorzugsweise ist der leitfähige Vliesstoff einer, bei dem 80 bis 90 Gew.% einer Mischung von Binde- und präoxidierten Faser im Gewichtsverhältnis von 0 : 1 bis 1 : 3 und 10 bis 20 Gew.% einer wasserlöslichen Faser mit Fasertitern von 0,8 bis 3,3 dtex eingesetzt werden. Diese Zusammensetzung der Fasern und deren Feinheiten führen zu leitfähigen Vliesstoffen mit Porositäten von 70 bis 95. Vorzugsweise ist der leitfähige Vliesstoff weiterhin einer, bei dem zwei unterschiedlich wasserlösliche Fasern verwendet werden, von denen eine bei

Temperaturen von 10 bis 40°C wasserlöslich und die andere bei Temperaturen von 80 bis 120°C wasserlöslich ist. Durch die Verwendung von unterschiedlich wasserlöslichen Fasern werden die Fasern im Temperaturbereich von 10 bis 40 °C schon bei der Wasserstrahlverfestigung des Faserflores herausgelöst und definierte Kanäle in der Vliesschicht ausgebildet, die eine verbesserte Gasdurchlässigkeit und einen verbesserten Abtransport des entstehenden Reaktionswassers in der daraus hergestellten Gasdirffusionsschicht gestatten. Die erst im Temperaturbereich von 80 bis 120 °C wasserlöslichen Fasern verbleiben im verfestigten Vlies und werden im feuchten Zustand bedingt durch ihre Klebrigkeit zu Bindefasem. Das Vlies wird dazu im noch feuchten Zustand durch einen Kalander geführt und verdichtet.

Vorzugsweise ist der leitfähige Vliesstoff einer, bei dem das Verhältnis der wasserlöslichen Fasern zueinander 3:1 bis 1:3 beträgt. Durch dieses Verhältnis ist die Steifigkeit der Gasdiffusionsschlcht und deren Porosität einstellbar.

Besonders bevorzugt ist ein leitfähiger Vliesstoff der aus mehreren Faserschichten mit unterschiedlichen Porengrößen aufgebaut ist, wobei die Fasern der einzelnen Schichten urrterschiedliche Titer besitzen. Der progressive Aufbau des leitfähigen Vliesstoffes aus mehreren Faserschichten begünstigt die Transportreaktion zur Protonenaustauschermembran und den Abtransport des gebildeten Reaktionswassers.

Besonders bevorzugt sind leitfähige Vliesstoffe bei denen als Precurserfasem teilvernetzte Phenolharzfasern, Polyester- und/oder Polypropylenfasem als präoxidierte Fasern Homo-, Co- und/oder Terpolymere von PAN (Polyacrylnitril)-Fasem, Cellulosefaser und/oder Phenolharzfasern und als wasserlösliche Fasern PVA (Polyvinylalkohol)-Fasem eingesetzt werden. Die aus einem Vlies dieser Fasern erhaltene Gasdiffusionsfaserschicht lässt sich zum einen gut carbonisieren und zum anderen gut hinsichtlich ihrer Porenverteilung und ihrer Steifigkeit einstellen.

Besonders bevorzugt ist ein leitfähiger Vliesstoff, der durch Aufbringen eines Hydrophobierungsmittels wie PTFE (polytetrafluorethylen) hydrophobiert ist Durch die Hydrophobierung können die Transportvorgänge an den Phasengrenzflächen weiter verbessert werden.

Erfindungsgemäß werden der leitfähige Vliesstoff in der Weise hergestellt, dass
a) präoxidierte Fasern gegebenenfalls im Gemisch mit bis zu 30 Gew.% als Bindefasem dienenden carbonisierfähigen Precurserfasern und bis zu 30 Gew.% wasserlöslicher Fasern gemischt,
b) auf trockenem Wege mittels Krempel- und/oder Kardiermaschinen zu einem Faserflor mit einem Flächengewicht von 60 bis 300 g/m² gelegt,
c) durch Hochdruck-Fluidstrahlen bei Drücken von 100 bis 300 bar verfestigt,
d) bis zu einer Restfeuchte von 10 bis 50 % vorgetrocknet,
e) bei Anpreßdrücken von 20 bis 1000 N/cm² und Temperaturen von 100 bis 400°C kalandriert und
f) bei Temperaturen zwischen 800 und 2500°C carbonisiert und/oder graphitiert wird.

Vorzugsweise erfolgt die Herstellung dadurch, dass im Schritt
a) Fasern mit einem Fasertiter von 0,8 bis 3,3 dtex und einer Faserlänge von 30 bis 70 mm eingesetzt werden,
b) Faserflore mit einem Flächengewicht von 30 bis 180 g/m² gelegt werden und
e) bei Anpreßdrücken von 40 bis 700 N/cm² und Temperaturen von 180 bis 300°C kalandriert und
f) bei Temperaturen zwischen 1000 und 1800°C carbonisiert sowie graphitiert wird.

Besonders bevorzugt ist, dass im Schritt
e) mindestens 2 Vliesstofflagen zusammen kalandriert werden.

Die Erfindung wird nachfolgend anhand von Beispielen näher erläutert.

### Beispiel 1

Eine präoxidierte PAN-Faser (oxidized PAN fiber - OPF) mit einem Fasertiter von 0,8 dtex und Faserlängen von 60 mm wird zu einem Faserflor mit einem Flächengewicht von 100 g/m² auf einer Kadieranlage abgelegt. Der Faserflor wird einer Verfestigungseinheit zugeführt, bei der die Fasern mittels hochenergetischer Wasserstrahlen beidseitig bei Drücken von jeweils ca. 100 bar in der ersten Stufe und jeweils ca. 170 bar in einer zweiten Stufe verwirbelt und miteinander verschlungen werden. Der Vliesstoff wird bis zu einer Restfeuchte von 15 bis 20% vorgetrocknet. Im noch feuchten Zustand wird der Vliesstoff einem Filzbandkalander zugeführt und bei einer Temperatur von ca. 220°C und 20 bar verdichtet. Durch den Kalandrierprozeß wird die Dicke des wasserstrahlverfestigten Vliesstoffes von 0,8 mm auf eine Dicke von 0,4 bis 0,5 mm reduziert. Anschließend wird der Vliesstoff einer Carbonisierungseinheit zugeführt in der unter einer Stickstoffatmosphäre bei etwa 1000 bis 1400°C die Carbonisierung erfolgt. Der erhaltene leitfähige Vliesstoff weist bei einer Biegesteifigkeit <1 Taber und einer Luftdurchlässigkeft von 6,0 l/m²sPa eine Querleitfähigkeit, d.h. in der Schichtebene von 12 S/cm in Maschinenrichtung, 18 S/cm quer zur Maschinenrichtung auf und seine Durchgangsleitfähigkeit, d.h. senkrecht zur Schichtebene beträgt 90 S/cm², wobei dieser Wert bei einer

Flächenpressung von 4,07 bar ermittelt wurde. Seine Dichte beträgt 0,16 g/cm³, die Porosität 91% und der mittlere Porendurchmesser 25 µm.

### Beispiel 2

Ein zweischichtiger Faserflor bestehend aus einer ersten Florlage mit einem Flächengewicht von 50 g/m² aus 80 Gew.% OPF mit einem Fasertiter von 1,2 dtex und einer Faserlänge von 60 mm sowie 20 Gew.% einer TTP-Faser (textile tow precurser) mit einem Fasertiter von 1,7 dtex und einer Faserlänge von 40 mm und einer zweiten Florlage mit einem Flächengewicht von 50 g/m² aus 80 Gew.% OPF mit einem Fasertiter von 0,8 dtex und einer Faserlänge von 60 mm sowie 20 Gew.% einer TTP-Faser mit einem Fasertiter von 0,8 dtex und einer Faserlänge von 40 mm, die auf einer Kardieranlage quergelegt wurden, werden einer Verfestigungseinheit zugeführt, bei der die Fasern mittels hochenergetischer Wasserstrahlen beidseitig bei Drücken von jeweils ca. 120 bar in der ersten Stufe und jeweils ca. 190 bar in einer zweiten Stufe verwirbelt und miteinander verschlungen werden. Der Vliesstoff wird bis zu einer Restfeuchte von ca. 10% vorgetrocknet. Im noch feuchten Zustand wird der Vliesstoff einem Walzenkalander mit einer Stahlwalze und einer Baumwolle beschichteten Walze zugeführt, wobei die Temperatur der Stahlwalze ca. 210°C und die der Baumwolle beschichteten Walze ca. 150°C betrug und mit einem Liniendruck von 80 kp/cm² verdichtet wird. Durch den Kalandrierprozeß wird die Dicke des wasserstrahlverfestigten Vliesstoffes von 0,8 mm auf eine Dicke von 0,16 mm reduziert. Anschließend wird der Vliesstoff einer Carbonisierungseinheit zugeführt in der unter einer Stickstoffatmosphäre bei etwa 1000 bis 1400°C die Carbonisierung erfolgt Der erhaltene leitfähige Vliesstoff weist bei einer Biegesteifigkeit von 1 Taber und einer Luftdurchlässigkeit von 2 l/m²sPa eine Querleitfähigkeit, d.h. in der Schichtebene von 54 S/cm in Maschinenrichtung, 54 S/cm quer zur

Maschinenrichtung auf und seine Durchgangsleitfähigkeit, d.h. senkrecht zur Schichtebene beträgt 120 S/cm², wobei dieser Wert bei einer Flächenpressung von 4,07 bar ermittelt wurde. Seine Dichte beträgt 0,32 g/cm³. die Porosität 82% und der mittlere Porendurchmesser 15 µm.

### Beispiel 3

Eine präoxidierte PAN-Faser (oxidized PAN fiber - OPF) mit einem Fasertiter von 0,8 dtex und Faserlängen von 60 mm wird zu einem Faserflor mit einem Flächengewicht von 100 g/m² auf einer Kadieranlage abgelegt. Der Faserflor wird einer Verfiestigungsejnheit zugeführt, bei der die Fasern mittels hochenergetischer Wasserstrahlen beidseitig bei Drücken von jeweils ca. 100 bar in der ersten Stufe und jeweils ca. 170 bar in einer zweiten Stufe verwirbelt und miteinander verschlungen werden. Der Vliesstoff wird bis zu einer Restfeuchte von 15 bis 20% vorgetrocknet. Im noch feuchten Zustand wird der Vliesstoff einem Kalander bestehend aus einer Stahl- und einer Kunststoffwalze zugeführt und bei einer Temperatur von ca. 300°C und 250 kp/cm² verdichtet. Durch den Kalandrierprozeß wird die Dicke des wasserstrahlvertestigten Vliesstoffes von 0,9 mm auf eine Dicke von 0,14 mm reduziert Anschließend wird der Vliesstoff einer Carbonisierungseinheit zugeführt in der unter einer Stickstoffatmosphäre bei etwa 1000 bis 1400°C die Carbonisierung erfolgt Der erhaltene leitfähige Vliesstoff weist bei einer Biegesteifigkeit <1 Taber und einer Luftdurchlässigkeit von 1,0 l/m²sPa eine Querleitfähigkeit, d.h. in der Schichtebene von 93,7 S/cm in Maschinenrichtung, 73 S/cm quer zur Maschinenrichtung auf und seine Durchgangsleitfähigkeit, d.h. senkrecht zur Schichtebene beträgt 195 S/cm², wobei dieser Wert bei einer Flächenpressung von 4,07 bar ermittelt wurde. Seine Dichte beträgt 0,43 g/cm³, die Porosität 78% und der mittlere Porendurchmesser 7 µm.

## Patentansprüche

1. Leitfähiger Vliesstoff, welcher durch Fluidstrahlen verfestigt, carbonisiert und/oder graphitiert ist und eine Biegesteifigkeit < 8 Taber, eine Dichte von 0,1 g/cm³ bis 0,5 g/cm³, eine Dicke von 80 µm bis 500 µm und eine elektrische Leitfähigkeit von 10 bis 300 S/cm in der Vliesstoffbahn und 30 bis 220 S/cm² senkrecht zur Vliesstoffbahn besitzt, erhalten durch Ablage von präoxidierten Fasern für Carbonfasem zu einem Faserflor mit einem Flächengewicht von 30 bis 300 g/m², Verfestigung des Faserflors durch Hochdruck-Fluidstrahlen bei Drücken von 100 bis 300 bar, Verdichtung des verfestigten Faservlieses durch Kalandrierung um 50 bis 90 % seiner Ausgangsdicke sowie Carbonisierung und/oder Graphitierung unter einer Schutzgasatmosphäre bei 800°C bis 2500°C.

2. Leitfähiger Vliesstoff nach Anspruch 1 erhalten aus präoxidierten Fasern für Carbonfasern, die mit bis zu 30 Gew.% einer als Bindefaser dienenden Precurser- sowie bis zu 30 Gew.% einer wasserlöslichen Faser mit Fasertitern von 0,5 bis 6,7 dtex gemischt sind, Ablage zu einem Faserflor mit einem Flächengewicht von 30 bis 300 g/m², Verfestigung des Faserflors durch Hochdruck-Fluidstrahlen bei Drücken von 100 bis 300 bar, Verdichtung des verfestigten Faservlieses durch Kalandrierung um 50 bis 90 % seiner Ausgangsdicke sowie Carbonisierung und/oder Graphitierung unter einer Schutzgasatmosphäre bei 800°C bis 2500°C.

3. Leitfähiger Vliesstoff nach Anspruch 1 oder 2, **dadurch gekennzeichnet, dass** 80 bis 90 Gew.% einer Mischung von Precurser- und präoxidierten Faser im Gewichtsverhältnis von 0 : 1 bis 1 : 3 und 10 bis 20 Gew.% einer wasserlöslichen Faser mit Fasertitem von 0,8 bis 3,3 dtex eingesetzt werden.

4. Leitfähiger Vliesstoff nach einem der Ansprüche 1 bis 3, **dadurch gekennzeichnet, dass** zwei unterschiedlich wasserlösliche Fasern verwendet werden, von denen eine bei Temperaturen von 10 bis 40°C wasserlöslich und die andere bei Temperaturen von 80 bis 120°C wasserlöslich ist.

5. Leitfähiger Vliesstoff nach Anspruch 4, **dadurch gekennzeichnet, dass** das Verhältnis der wasserlöslichen Fasern zueinander 3:1 bis 1:3 beträgt.

6. Leitfähiger Vliesstoff nach einem der Ansprüche 1 bis 5, **dadurch gekennzeichnet, dass** er aus mehreren Faserschichten mit unterschiedlichen Porengrößen aufgebaut ist, wobei die Fasern der einzelnen Schichten unterschiedliche Titer besetzen.

7. Leitfähiger Vliesstoff nach einem der Ansprüche 1 bis 6, **dadurch gekennzeichnet, dass** mindestens zwei durch Hochdruck-Fluidstrahlen verfestigte Faservliesschichten durch Kalandrierung verbunden sind.

8. Leitfähiger Vliesstoff nach einem der Ansprüche 1 bis 7, **dadurch gekennzeichnet, dass** als Precurserfasem teilvernetzte Phenolharzfasern, Polyester- und/oder Polypropylenfasem als präoxidierte Fasern Homo-, Co- und/oder Terpolymere von PAN (Polyacrylnitril)-Fasem, Cellulosefaser und/oder Phenolharzfasern und als wasserlösliche Fasern PVA (Polyvinylalkohol)-Fasern eingesetzt werden.

9. Leitfähiger Vliesstoff nach einem der Ansprüche 1 bis 8, **dadurch gekennzeichnet, dass** er durch Aufbringen eines Hydrophobierungsmittel wie PTFE (Polytetrafluorethylen) hydrophobiert ist.

10. Leitfähiger Vliesstoff nach einem der Ansprüche 1 bis 9, **dadurch gekennzeichnet, dass** er mit einer Dichte von 0,1 g/cm³ bis 0,25 g/cm³ als Basismaterial für Elektroden und Gasdiffusionsschichten eingesetzt wird.

11. Leitfähiger Vliesstoff nach einem der Ansprüche 1 bis 9, **dadurch gekennzeichnet, dass** er mit einer Dichte von 0,25 g/cm³ bis 0,40 g/cm³ als Gasdiffusionsschicht in Polymerelektrolyt-Brennstoffzellen eingesetzt wird.

12. Leitfähiger Vliesstoff nach einem der Ansprüche 1 bis 9, **dadurch gekennzeichnet, dass** er mit einer Dichte von 0,40 g/cm³ bis 0,50 g/cm³ als Elektrode in Superkondensatoren eingesetzt wird.

13. Verfahren zur Herstellung eines leitfähigen Vliesstoffes nach einem der Ansprüche 1 bis 9, **dadurch gekennzeichnet, dass**
a) präoxidierte Fasern gegebenenfalls im Gemisch mit bis zu 30 Gew.% als Bindefasem dienenden carbonisierfähigen Precurserfasem und bis zu 30 Gew.% wasserlöslicher Fasern gemischt,
b) auf trockenem Wege mittels Krempel- und/oder Kardiermaschinen zu einem Faserflor mit einem Flächengewicht von 30 bis 300 g/m² gelegt,
c) durch Hochdruck-Fluidstrahlen bei Drücken von 100 bis 300 bar verfestigt,
d) bis zu einer Restfeuchte von 10 bis 50 % vorgetrocknet,
e) bei Anpressdrücken von 20 bis 1000 N/cm² und Temperaturen von 100 bis 400°C kalandriert und
f) bei Temperaturen zwischen 800 und 2500°C carbonisiert sowie graphitiert wird.

14. Verfahren nach Anspruch 13, **dadurch gekennzeichnet, dass** im Schritt
a) Fasern mit einem Fasertiter von 0,8 bis 3,3 dtex und einer Faserlänge von 30 bis 70 mm eingesetzt werden,
b) Faserflore mit einem Flächengewicht von 30 bis 180 g/m² gelegt werden und
e) bei Anpressdrücken von 40 bis 700 N/cm² und Temperaturen von 180 bis 300°C kalandriert und
f) bei Temperaturen zwischen 1000 und 1800°C carbonisiert sowie graphitiert wird.

15. Verfahren nach Anspruch 13 oder 14, **dadurch gekennzeichnet, dass** im Schritt
e) mindestens 2 Vliesstofflagen zusammen kalandriert werden.

## Claims

1. Conductive nonwoven fabric which is consolidated by jets of fluid, carbonized and/or graphitized and has a bending stiffness < 8 Taber, a density of 0.1 g/cm³ to 0.5 g/cm³, a thickness of 80 µm to 500 µm and an electrical conductivity of 10 to 300 S/cm within the nonwoven fabric web and 30 to 220 S/cm² perpendicularly to the nonwoven fabric web, obtained by laydown of oxidized fibres for carbon fibres to form a fibrous web having a basis weight of 30 to 300 g/m², consolidation of the fibrous web by high pressure jets of fluid at pressures of 100 to 300 bar, densification of the consolidated fibrous web by calendering by 50 to 90% of its starting thickness and also carbonization and/or graphitization under a protective gas atmosphere at 800°C to 2500°C.

2. Conductive nonwoven fabric according to Claim 1, obtained from oxidized fibres for carbon fibres which are mixed with up to 30% by weight of a precursor fibre serving as binder fibre and also up to 30% by weight of a water-soluble fibre having fibre linear densities of 0.5 to 6.7 dtex, laydown to form a fibrous web having a basis weight of 30 to 300 g/m², consolidation of the fibrous web by high pressure jets of fluid at pressures of 100 to 300 bar, densification of the consolidated fibrous web by calendering by 50 to 90% of its starting thickness and also carbonization and/or graphitization under a protective gas atmosphere at 800°C to 2500°C.

3. Conductive nonwoven fabric according to Claim 1 or 2, **characterized in that** 80 to 90% by weight of a mixture of precursor fibre and oxidized fibre in a weight ratio of 0:1 to 1:3 and 10 to 20% by weight of a water-soluble fibre having fibre linear densities of 0.8 to 3.3 dtex is used.

4. Conductive nonwoven fabric according to any one of Claims 1 to 3, **characterized in that** two differently water-soluble fibres are used, one of which is water soluble at temperatures of 10 to 40°C and the other at temperatures of 80 to 120°C.

5. Conductive nonwoven fabric according to Claim 4, **characterized in that** the ratio of the water-soluble fibres to each other is in the range from 3:1 to 1:3.

6. Conductive nonwoven fabric according to any one of Claims 1 to 5, **characterized in that** it is constructed of a plurality of fibrous layers having different pore sizes, the fibres of the individual layers having different linear densities.

7. Conductive nonwoven fabric according to any one of Claims 1 to 6, **characterized in that** at least two fibrous web layers consolidated by high pressure jets of fluid are connected together by calendering.

8. Conductive nonwoven fabric according to any one of Claims 1 to 7, **characterized in that** partially crosslinked phenolic resin fibres, polyester and/or polypropylene fibres are used as precursor fibres, homo-, co- and/or terpolymers of PAN (polyacrylonitrile) fibres, cellulose fibre and/or phenolic resin fibres are used as oxidized fibres and PVA (polyvinyl alcohol) fibres are used as water-soluble fibres.

9. Conductive nonwoven fabric according to any one of Claims 1 to 8, **characterized in that** it is hydrophobicized by application of a hydrophobicizing agent such as PTFE (polytetrafluoroethylene).

10. Conductive nonwoven fabric according to any one of Claims 1 to 9, **characterized in that** when its density is in the range from 0.1 g/cm³ to 0.25 g/cm³ it is used as a base material for electrodes and gas diffusion layers.

11. Conductive nonwoven fabric according to any one of Claims 1 to 9, **characterized in that** when its density is in the range from 0.25 g/cm³ to 0.40 g/cm³ it is used as a gas diffusion layer in polymer electrolyte fuel cells.

12. Conductive nonwoven fabric according to any one of Claims 1 to 9, **characterized in that** when its density is in the range from 0.40 g/cm³ to 0.50 g/cm³ it is used as an electrode in supercapacitors.

13. Process for producing a conductive nonwoven fabric according to any one of Claims 1 to 9, **characterized in that**
a) oxidized fibres are optionally mixed with up to 30% by weight of carbonizable precursor fibres serving as binder fibres and up to 30% by weight of water-soluble fibres,
b) dry laid by means of roller and/or flat carding machines to form a fibrous web having a basis weight of 30 to 300 g/m²,
c) consolidated by high pressure jets of fluid at pressures of 100 to 300 bar,
d) predried down to a residual moisture content of 10 to 50%,
e) calendered at contact pressures of 20 to 1000 N/cm² and temperatures of 100 to 400°C, and
f) carbonized and also graphitized at temperatures between 800 and 2500°C.

14. Process according to Claim 13, **characterized in that** in step
a) fibres having a fibre linear density of 0.8 to 3.3 dtex and a fibre length of 30 to 70 mm are used,
b) fibrous webs having a basis weight of 30 to 180 g/m² are laid and
e) calendering is effected at contact pressures of 40 to 700 N/cm² and temperatures of 180 to 300°C and
f) carbonizing and also graphitizing is effected at temperatures between 1000 and 1800°C.

15. Process according to Claim 13 or 14, **characterized in that** in step
e) at least 2 plies of nonwoven fabric are calendered together.

## Revendications

1. Matière non tissée conductrice, qui est consolidée, carbonisée et/ou graphitisée par des jets de fluide et qui possède une résistance à la flexion < 8 unités d'abrasion Taber, une densité de 0,1 g/cm³ à 0,5 g/cm³, une épaisseur de 80 µm à 500 µm et une conductibilité électrique de 10 à 300 S/cm dans la bande de matière non tissée et de 30 à 220 S/cm² perpendiculairement à la bande de matière non tissée, obtenue par dépôt de fibres pré-oxydées pour des fibres de carbone pour former une nappe de fibres ayant un grammage de 30 à 300 g/m², par consolidation de la nappe de fibres par des jets de fluide haute pression à des pressions de 100 à 300 bars, par densification du non tissé à fibres consolidé par calandrage jusqu'à parvenir à de 50 à 90% de sa densité de départ ainsi que par carbonisation et/ou par graphitisation sous une atmosphère de gaz de protection à la température de 800°C à 2500°C.

2. Matière non tissée selon la revendication 1, obtenue à partir de fibres pré-oxydées pour des fibres de carbone, qui sont mélangées avec jusqu'à 30 % en poids de fibres jouant le rôle de précurseur, servant en tant que liant, ainsi que jusqu'à 30 % en poids de fibres hydrosolubles ayant un titre de fibres de 0,5 à 6,7 décitex, par dépôt pour former une nappe de fibres ayant un grammage de 30 à 300 g/m², par consolidation de la nappe de fibres par des jets de fluide haute pression à des pressions de 100 à 300 bars, par densification du non tissé de fibres consolidé par calandrage pour parvenir à de 50 à 90 % de sa densité de départ ainsi que par carbonisation et/ou par graphitisation sous une atmosphère de gaz de protection à la température de 800°C à 2500°C.

3. Matière non tissée selon la revendication 1 ou la revendication 2, **caractérisée en ce que** l'on utilise de 80 à 90 % en poids d'un mélange de fibres jouant le rôle précurseur et de fibres pré-oxydées dans un rapport pondéral de 0 : 1 à 1 : 3 et de 10 à 20 % en poids d'une fibre hydrosoluble ayant un titre de fibres de 0,8 à 3,3 décitex.

4. Matière non tissée selon l'une quelconque des revendications 1 à 3, **caractérisée en ce que** l'on utilise deux fibres, solubles dans l'eau d'une manière différente, dont l'une est soluble à des températures allant de 10 à 40°C et dont l'autre est soluble à des températures allant de 80 à 120°C.

5. Matière non tissée selon la revendication 4, **caractérisée en ce que** le rapport des fibres hydrosolubles l'une par rapport à l'autre est de 3:1 à 1:3.

6. Matière non tissée selon l'une quelconque des revendications précédentes 1 à 5, **caractérisée en ce qu'**elle est constituée de plusieurs couches de fibres ayant des grandeurs de pores différentes, les fibres des couches individuelles possédant des titres différents.

7. Matière non tissée selon l'une quelconque des revendications 1 à 6, **caractérisée en ce qu'**au moins deux couches de non tissé à fibres consolidées par des jets de fluide haute pression sont liées ensemble par calandrage.

8. Matière non tissée conductrice selon l'une quelconque des revendications 1 à 7, **caractérisée en ce que** l'on utilise, en tant que fibres jouant le rôle de précurseur, des fibres de résine phénolique, des fibres de polyester et/ou des fibres de polypropylène partiellement réticulées, en tant que fibres pré-oxydées des homopolymères, des copolymères et/ou des terpolymères de fibres PAN (polyacrylonitrile), des fibres de cellulose et/ou des fibres de résine phénolique et, en tant que fibres hydrosolubles, des fibres de PVA (alcool polyvinylique).

9. Matière non tissée conductrice selon l'une quelconque des revendications 1 à 8, **caractérisée en ce qu'**elle est rendue hydrophobe par l'application d'un agent d'hydrophobisation comme le PTFE (polytétrafluoroéthylène).

10. Matière non tissée conductrice selon l'une quelconque des revendications 1 à 9, **caractérisée en ce qu'**elle est utilisée avec une densité de 0,1 g/cm³ à 0,25 g/cm³ en tant que matériau de base pour des électrodes et des couches de diffusion de gaz.

11. Matière non tissée conductrice selon l'une quelconque des revendications 1 à 9, **caractérisée en ce qu'**elle est utilisée avec une densité de 0,25 g/cm³ à 0,40 g/cm³ en tant que couche de diffusion de gaz dans des piles à combustible à électrolyte polymère.

12. Matière non tissée conductrice selon l'une quelconque des revendications 1 à 9, **caractérisée en ce qu'**elle est utilisée avec une densité de 0,40 g/cm³ à 0,50 g/cm³ en tant qu'électrode dans des super-condensateurs.

13. Procédé en vue de la fabrication d'une matière non tissée selon l'une quelconque des revendications 1 à 9, **caractérisé**
a) **en ce que** les fibres pré-oxydées sont mélangées, le cas échéant, avec jusqu'à 30 % en poids de fibres jouant le rôle de précurseur, capables de carbonisation, servant en tant que fibres de liant et jusqu'à 30 % en poids de fibres hydrosolubles,
b) **en ce qu'**elles sont façonnées à l'état sec à l'aide de machines de mise en forme et/ou de cardage pour former une nappe de fibres ayant un grammage allant de 30 bis 300 g/m²,
c) **en ce qu'**elles sont consolidées à l'aide d'un jet de fluide haute pression à des pressions de 100 à 300 bars,
d) **en ce qu'**elles sont pré-séchées jusqu'à une humidité résiduelle de 10 à 50 %,
e) **en ce qu'**elles subissent un calandrage à des pressions d'application de 20 à 1000 N/cm² et à des températures de 100 à 400°C et
f) **en ce qu'**elles sont carbonisées ainsi que graphitisées à des températures comprises entre 800 et 2500°C.

14. Procédé selon la revendication 13, **caractérisé**
a)en ce que, dans l'étape, l'on utilise des fibres ayant un titre de fibre de 0,8 à 3,3 décitex et une longueur de fibre de 30 à 70 mm,
b) en ce que l'on forme des nappes de fibres ayant un grammage de 30 à 180 g/m² et
e) en ce que l'on procède à un calandrage à des pressions d'application de 40 à 700 N/cm² et à des températures de 180 à 300°C et
f) en ce que l'on procède à une carbonisation ainsi qu'à une graphitisation à des températures comprises entre 1000 et 1800°C.

15. Procédé selon la revendication 13 ou 14,
**caractérisé**
e) en ce que l'on procède au calandrage conjoint d'au moins deux couches de matières non tissées.
